# EUROPÄISCHE PATENTSCHRIFT

(11) **EP 0 895 015 B1**
(45) Veröffentlichungstag und Bekanntmachung des Hinweises auf die Patenterteilung: **04.02.2004**
(21) Anmeldenummer: 98113994.2
(22) Anmeldetag: 27.07.1998
(51) Int. Cl.: F16L 33/00, F16L 33/02, F16L 11/12

(54) **Schlauch, insbesondere Kraftfahrzeug-Kühlwasserschlauch**
Hose, particularly a vehicle radiator hose
Tuyau flexible particulièrement un tuyau de radiateur de véhicule

(30) Priorität: 01.08.1997 DE 19733488
(43) Veröffentlichungstag der Anmeldung: 03.02.1999
(73) Patentinhaber: ContiTech Schlauch GmbH, 30165 Hannover (DE)
(72) Erfinder: Bornemann, Axel, 37191 Katlenburg-Lindau (DE)

(56) Entgegenhaltungen:
- EP-A- 0 131 874
- DE-C- 3 528 560
- US-A- 3 938 237

## Beschreibung

Die Erfindung betrifft einen Schlauch gemäß dem Oberbegriff des Patentanspruchs 1.

Derartige Schläuche sind in zahlreichen Ausführungsformen bekannt und dienen in unterschiedlichen Bereichen der Technik zum sicheren Transport unterschiedlicher Fluide, insbesondere von Kühlwasser für Kraftfahrzeug-Motoren. Dabei ist die absolut dichte Gestaltung der Schlauchanschlüsse an den Übergängen der Schläuche zu den an sie angeschlossenen Aggregaten von besonderer - und häufig entscheidender - Bedeutung.

In einem großen Teil der praktischen Anwendungsfälle werden diese Übergänge durch Aufstecken der Schlauchenden auf Anschlußstutzen oder entsprechende Verbindungsstücke und anschließende Fixierung mittels Schlauchschellen realisiert. Für eine sichere Abdichtung kommt es dabei insbesondere darauf an, dass der Schlauch unter Einhaltung einer vorbestimmten optimalen Aufschublänge also weder zu weit noch zu knapp auf den Stutzen aufgeschoben - und so fixiert wird, dass die Schlauchschelle die Schlauchwandung in einem hierfür geeigneten, u.U. durch besondere Formgebung vorbereiteten Bereich der Stutzenoberfläche - z.B. im Bereich umlaufender Halte- bzw. Dichtrippen - gegen diese presst.

Wo die Länge des Anschlußstutzens selbst ein Maß für die optimale Aufschublänge bildet - wie beispielsweise bei der in Figur 1 der DE-PS 35 28 560 dargestellten Anordnung, in der das Schlauchende bis an einen flanschartigen Absatz des Stutzens aufgeschoben ist und auch gar nicht weiter aufgeschoben werden kann - ist die korrekte Schlauchfixierung kein Problem. Wenn dagegen aus konstruktiven Gründen ein längerer Anschlußstutzen vorgegeben ist, ergeben sich - insbesondere unter den beengten räumlichen Einbauverhältnissen im Motorraum von Kraftfahrzeugen - die o.a. Schwierigkeiten.

Es stellte sich daher die Aufgabe, die entsprechenden Schläuche schon bei ihrer Herstellung so zu gestalten, dass sie sich nur bis zu einer vorgegebenen optimalen Länge auf die ihnen zugeordneten Anschlußstutzen aufschieben lassen.

Erfindungsgemäß wird diese Aufgabe durch einen Schlauch der eingangs genannten Art gelöst, der die im kennzeichnenden Teil des Patentanspruchs 1 genannten Merkmale aufweist. In den Unteransprüchen sind vorteilhafte Ausführungsformen und Weiterbildungen der Erfindung angegeben.

Überraschenderweise hat sich gezeigt, daß die erfindungsgemäße nur örtliche, starre Festlegung der Schlauchwandung mittels eines starren, von außen angelegten Ringes die Aufschublänge des Schlauchendes auf einen Stutzen exakt begrenzt. Durch die vorliegende Erfindung wird daher eine verblüffend einfache Möglichkeit geschaffen, Schläuche zu produzieren, die sich - manuell oder mittels eines Montage-Roboters, beliebig oft reproduzierbar - immer genau bis zu einer vorbestimmten Länge auf einen Stutzen aufschieben lassen.

Dabei ist der Betrag der Aufschublänge innerhalb der in Betracht kommenden Grenzen beliebig wählbar. Es ist beispielsweise problemlos möglich, einen endlos oder in großen Längen produzierten Schlauch in eine Vielzahl von Abschnitten abzulängen und diese dann mit verschiedenen Aufschublängen zu konfektionieren, indem man entsprechende starre Ringe verschieden weit auf die Schlauchenden aufschiebt und dort fixiert. Ferner kann die Soll-Aufschublänge einer Schlauchtype ohne wesentlichen Aufwand geändert werden, indem nur die Positionierung des starren Ringes entsprechend neu festgelegt wird.

Die erfindungsgemäß vorgeschlagenen nicht aufweitbaren Ringe bestehen vorteilhaft aus einem polymeren Werkstoff, wobei sich insbesondere Polyamid bewährt hat. Vorzugsweise sind zur maßlichen Stabilisierung in diese Kunststoffe Fasern oder Fäden geringer Dehnfähigkeit eingebettet, und zwar insbesondere Glasfasern oder -fäden. Eine andere vorteilhafte Möglichkeit besteht darin, die Ringe aus einem nichtkorrosiven Metall herzustellen.

Zur Erleichterung des Aufschiebens auf die Schlauchenden weisen die vorgeschlagenen Ringe an den Übergängen ihrer Stirnflächen zu ihren inneren Mantelflächen vorzugsweise je eine Fase auf, die zur Schlauchachse ringsum unter einem Winkel geneigt ist, der vorteilhaft kleiner als 45° ist und insbesondere zwischen 30° und 40° beträgt. Eine andere vorteilhafte Möglichkeit besteht darin, den Querschnitt der Ringe, in Umfangsrichtung gesehen - zumindest an der dem Schlauch zugewandten Seite - gerundet, insbesondere kreisrund, auszubilden.

Die lichte Weite der vorgeschlagenen nicht aufweitbaren Ringe ist vorzugsweise geringfügig kleiner als der Außendurchmesser der betreffenden Schläuche, und zwar haben sich lichte Weiten der Ringe besonders bewährt, die 4 - 8 % kleiner sind als die Außendurchmesser der jeweiligen Schläuche.

Insbesondere bei Schläuchen, die wiederholt montierbar und demontierbar sein sollen, kann es zweckmäßig sein, die axiale Fixierung der besagten Ringe in ihrer Sollposition durch ein Haftmittel zu unterstützen, durch das sie kraftschlüssig mit der Außenfläche der Schlauchmäntel verbunden werden.

In der Zeichnung wird die Erfindung anhand schematisch dargestellter Ausführungsbeispiele erläutert. Es zeigen:
- Fig. 1: ein zur Montage auf einen Schlauchstutzen vorbereitetes erfindungsgemäßes Schlauchende,
- Fig. 2a und Fig. 2b: bevorzugte Ausführungsformen nicht aufweitbarer Ringe für erfindungsgemäße Schläuche.

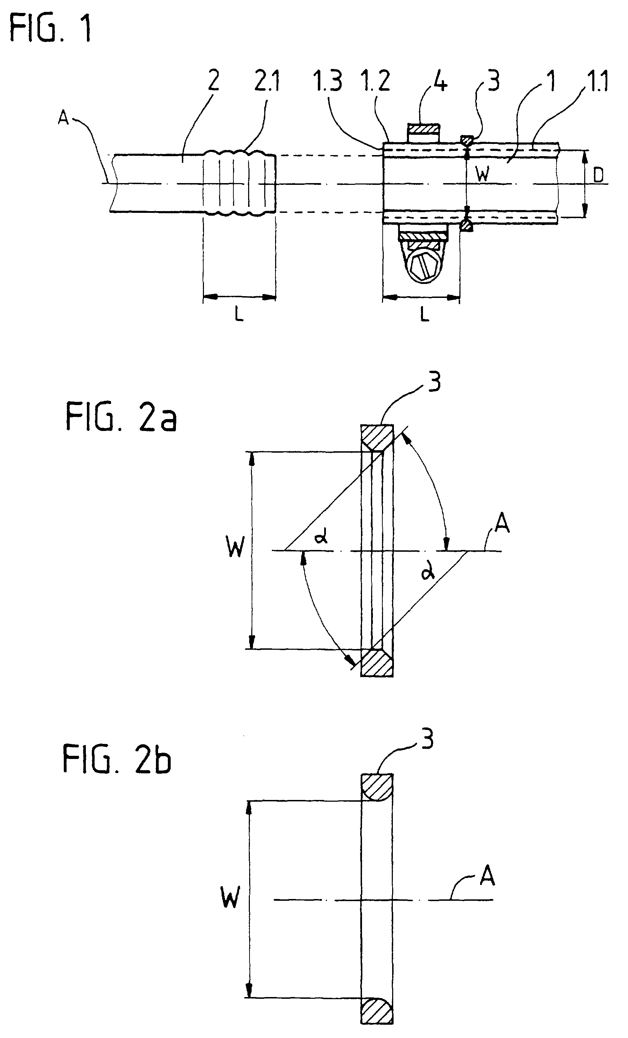

Der in Figur 1 im Längsschnitt wiedergegebene Schlauch 1 ist zur Montage auf einen koaxial in Seitenansicht dargestellten Stutzen 2 vorgesehen, dessen Außendurchmesser geringfügig größer ist als die lichte Weite des Schlauches, so daß der Schlauch zum Aufschieben auf den Stutzen geringfügig aufgeweitet werden muß. Der Stutzen 2 weist innerhalb der vorgesehenen Aufschublänge L in dem Bereich, in dem durch radiale Pressung der Schlauchwandung mittels einer Schlauchschelle 4 der Schlauch am Stutzen fixiert werden soll, Halterippen 2.1 auf. Die Schlauchwandung enthält, im allgemeinen in Form eines textilen Geflechtes, Verstärkungseinlagen 1.1.

Erfindungsgemäß ist ein nicht aufweitbarer Ring 3 auf den Schlauch so weit aufgeschoben, daß sein Abstand L zum freien Ende 1.3 des Schlauches dessen vorgesehener Aufschublänge L auf den Stutzen 2 entspricht. Da der Ring 3 den Schlauch 1 eng umfaßt bzw. seine lichte Weite W vorzugsweise um 4 - 8 % kleiner ist als der Außendurchmesser D des Schlauches 1, ist die zum Aufschieben des Schlauches auf den Stutzen notwendige Aufweitung des Schlauches am Ort des Ringes 3 nicht möglich mit der Folge, daß sich der Schlauch nur so weit auf den Stutzen aufschieben läßt, bis die Stutzenvorderkante in seinem Innern den Ort des Ringes 3 erreicht.

Die Figuren 2a und 2b zeigen in vergrößerter Darstellung Querschnitte bevorzugter Ausführungsformen nicht aufweitbarer Ringe 3, und zwar ist der Ring gemäß Figur 2a an seiner Innenseite in beiden axialen Richtungen mit je einer Fase versehen, die mit der Schlauchachse einen Winkel α bildet und bei der Montage des Ringes auf den Schlauch - gleichgültig von welcher Seite her - das Aufschieben auf das Schlauchende erleichtert. Bei der in Figur 2b dargestellten Ausführungsform des Ringes 3 wirkt die Abrundung seiner Innenkontur, die insbesondere kreisförmig sein kann, entsprechend.

## Patentansprüche

1. Schlauch (1), insbesondere Kraftfahrzeug-Kühlwasserschlauch, dessen Wandung aus elastomeren Werkstoffen und gegebenenfalls in diese eingebetteten textilen Verstärkungseinlagen (1.1) gebildet ist und der mindestens einen unter radialer Aufweitung auf einen starren Stutzen (2) aufschiebbaren und an diesem mittels einer Schlauchschelle (4) fixierbaren Endbereich (1.2) aufweist, **dadurch gekennzeichnet, daß** er in einem axialen Abstand (L) von dem freien Ende (1.3) des Endbereichs (1.2), der einer vorbestimmten optimalen axialen Aufschublänge (L) auf dem starren Stutzen (2) entspricht, mit einem nicht aufweitbaren Ring (3) eng umfaßt ist.

2. Schlauch nach Anspruch 1, **dadurch gekennzeichnet, daß** der Ring (3) aus einem polymeren Werkstoff gebildet ist.

3. Schlauch nach Anspruch 2, **dadurch gekennzeichnet, daß** der polymere Werkstoff ein Polyamid, ist.

4. Schlauch nach Anspruch 2 oder 3, **dadurch gekennzeichnet, daß** in den polymeren Werkstoff Fasern oder Fäden geringer Dehnfähigkeit eingebettet sind.

5. Schlauch nach Anspruch 4, **dadurch gekennzeichnet, daß** in den Ring (3) Glasfasern oder -fäden eingebettet sind.

6. Schlauch nach Anspruch 1, **dadurch gekennzeichnet, daß** der Ring (3) aus einem nichtkorrosiven Metall gebildet ist.

7. Schlauch nach einem der Ansprüche 1 bis 6, **dadurch gekennzeichnet, daß** der Ring (3) an den Übergängen seiner beiden Stirnflächen zu seiner inneren Mantelfläche je eine Fase aufweist, die zur Schlauchachse A ringsum unter einem Winkel α geneigt ist, wobei **α** < 45° ist.

8. Schlauch nach Anspruch 7, **dadurch gekennzeichnet, daß** gilt 30° < α < 40°.

9. Schlauch nach einem der Ansprüche 1 bis 6, **dadurch gekennzeichnet, daß** der Querschnitt des Ringes (3), in Umfangsrichtung gesehen - zumindest an der dem Schlauch (1) zugewandten Seite - gerundet ausgebildet ist.

10. Schlauch nach Anspruch 9, **dadurch gekennzeichnet, daß** der Querschnitt des Ringes (3), in Umfangsrichtung gesehen - zumindest an der dem Schlauch (1) zugewandten Seite - kreisrund ausgebildet ist.

11. Schlauch nach einem der Ansprüche 1 bis 10, **dadurch gekennzeichnet, daß** die lichte Weite (W) des Ringes (3) um 4 bis 8% kleiner ist als der Außendurchmesser (D) des Schlauches (1).

12. Schlauch nach einem der Ansprüche 1 bis 11, **dadurch gekennzeichnet, daß** der Ring (3) durch ein Haftmittel in seiner Sollposition an der Außenfläche des Schlauchmantels fixiert ist.

## Claims

1. Hose (1), in particular a cooling water hose for an automotive vehicle, the walls of said hose being formed from elastomeric materials and possibly textile reinforcement inserts (1.1) embedded in said materials, and said hose having at least one end region (1.2) which, with radial widening, can be pushed onto a rigid connection piece (2) and fixed to same by means of a hose clamp (4), **characterised in that** that the hose is closely surrounded by a non-widening ring (3) at an axial spacing (L) from the free end (1.3) of the end region (1.2) which corresponds to a predetermined optimal axial displacement length (L) on the rigid connection piece (2).

2. Hose according to claim 1, **characterised in that** the ring (3) is formed from a polymer material.

3. Hose according to claim 2, **characterised in that** the polymer material is a polyamide.

4. Hose according to claim 2 or 3, **characterised in that** fibres or threads of low extensibility are embedded in the polymer material.

5. Hose according to claim 4, **characterised in that** glass fibres or glass threads are embedded in the ring (3).

6. Hose according to claim 1, **characterised in that** the ring (3) is formed from a non-corrosive metal.

7. Hose according to one of claims 1 to 6, **characterised in that** the ring (3) has at each of the transitions of its two end surfaces to its inner surface area a bevel which is inclined at an angle α all round relative to the hose axis A, α being < 45°.

8. Hose according to claim 7, **characterised in that** the following applies: 30° < α < 40°.

9. Hose according to one of claims 1 to 6, **characterised in that** the cross-section of the ring (3) is formed rounded, when viewed in the circumferential direction - at least on the side facing the hose (1).

10. Hose according to claim 9, **characterised in that** the cross-section of the ring (3) is formed circular, when viewed in the circumferential direction - at least on the side facing the hose (1).

11. Hose according to one of claims 1 to 10, **characterised in that** the internal diameter (W) of the ring (3) is 4 to 8% smaller than the external diameter (D) of the hose (1).

12. Hose according to one of claims 1 to 11, **characterised in that** the ring (3) is fixed by an adhesive in its desired position on the outer surface of the hose casing.

## Revendications

1. Tuyau souple (1), en particulier tuyau d'eau de refroidissement d'un véhicule automobile dont la paroi est constituée de matériaux élastomères et, le cas échéant, de nappes de renfort textiles (1.1) enrobées dans ces matériaux élastomères, et qui comprend au moins une zone d'extrémité (1.2) pouvant coulisser sur une tubulure fixe (2) suivant un élargissement radial et pouvant être fixée, sur cette tubulure, au moyen d'un collier de tuyau (4),
**caractérisé en ce que** le tuyau, dans un espacement axial (L) par rapport à l'extrémité libre (1.3) de la zone d'extrémité (1.2) qui correspond à une longueur axiale (L) de coulissement, optimale et prédéterminée, sur la tubulure fixe (2), est étroitement entouré par un anneau (3) ne pouvant pas être élargi.

2. Tuyau souple selon la revendication 1, **caractérisé en ce que** l'anneau (3) est formé dans un matériau polymère.

3. Tuyau souple selon la revendication 2, **caractérisé en ce que** le matériau polymère est un polyamide.

4. Tuyau souple selon la revendication 2 ou 3, **caractérisé en ce que** des fibres ou des fils de faible élasticité sont enrobés dans le matériau polymère.

5. Tuyau souple selon la revendication 4, **caractérisé en ce que** des fibres de verre ou des fils de verre sont enrobés dans l'anneau (3).

6. Tuyau souple selon la revendication 1, **caractérisé en ce que** l'anneau (3) est constitué d'un métal non corrosif.

7. Tuyau souple selon l'une quelconque des revendications 1 à 6, **caractérisé en ce que** l'anneau (3), au niveau des passages entre ses deux surfaces frontales et sa surface latérale intérieure, présente à chaque fois une partie en biseau qui est inclinée tout autour suivant un angle α, par rapport à l'axe A du tuyau souple, cet angle α étant inférieur à 45°.

8. Tuyau souple selon la revendication 7, **caractérisé en ce que** l'angle α est supérieur à 30° et inférieur à 40°.

9. Tuyau souple selon l'une quelconque des revendications 1 à 6, **caractérisé en ce que** la section de l'anneau (3) - vue dans la direction circonférentielle - est de forme arrondie, au moins sur le côté tourné vers le tuyau souple (1).

10. Tuyau souple selon la revendication 9, **caractérisé en ce que** la section de l'anneau (3) - vue dans la direction circonférentielle - est de forme circulaire, au moins sur le côté tourné vers le tuyau souple (1).

11. Tuyau souple selon l'une quelconque des revendications 1 à 10, **caractérisé en ce que** le diamètre intérieur (W) de l'anneau (3) est inférieur de 4 % à 8 % au diamètre extérieur (D) du tuyau souple (1).

12. Tuyau souple selon l'une quelconque des revendications 1 à 11, **caractérisé en ce que** l'anneau (3) est fixé, par un adhésif, dans sa position théorique, sur la surface extérieure de l'enveloppe du tuyau souple.
